# EUROPEAN PATENT APPLICATION

(11) **EP 4 187 471 A1**
(43) Date of publication of application: **31.05.2023**
(21) Application number: 21020598.5
(22) Date of filing: 26.11.2021
(51) Int. Cl.: G06Q 30/06

(54) **METHOD AND APPARATUS FOR INVESTIGATING A CONFIGURATION OF A VEHICLE**

(71) Applicant: Dr.Ing. h.c. F. Porsche Aktiengesellschaft, 70435 Stuttgart (DE)
(72) Inventor: Foligno, Mark, 10245 Berlin (DE)

(57) **Abstract**

The invention provides a method of investigating a configuration of a vehicle characterized in that a badge (11) on the vehicle (10) is scanned for an invisible barcode (12) by a user (13) and, by means of the barcode (12), the user (13) is directed to the configuration online.

The invention further provides a corresponding data processing apparatus, a corresponding computer program, and a corresponding computer-readable medium.

## Description

The present invention pertains to a method of investigating a configuration of a vehicle. The invention further relates to a corresponding data processing apparatus, a corresponding computer program, and a corresponding computer-readable medium.

### Background art

High-end sports cars are often photographed by fans of the respective brand, but also those who themselves are interested in knowing the exact configuration of the car so they can investigate the possibility of purchasing a replica of that configuration.

DE102018001628A1, DE102020106844A1, and DE102014009519A1 each disclose a method and system for querying the configuration of a vehicle having a two-dimensional code such as a QR code, which is attached to the exterior of the vehicle, in particular its license plate, wherein the camera of the user's smartphone is used to scan the code, directing the browser to an online configurator that displays the configuration of the vehicle.

### Disclosure of the invention

The present invention provides a method of investigating a configuration of a vehicle, a corresponding data processing apparatus, a corresponding computer program, and a corresponding computer-readable medium as per the independent claims.

Advantageously, the invention facilitates the investigation of any interested party into the possibility of purchasing a replica of a specific car configuration using his or her smartphone camera. From a manufacturer's perspective, this capability increases the prospects of purchase for the car model thus equipped.

Embodiments of the invention are set out in the dependent claims.

### Brief description of drawings

- Figure 1: shows a first use case of a method as per the invention.
- Figure 2: shows an online car configurator.
- Figure 3: shows a second use case of a method as per the invention.

### Embodiment of the invention

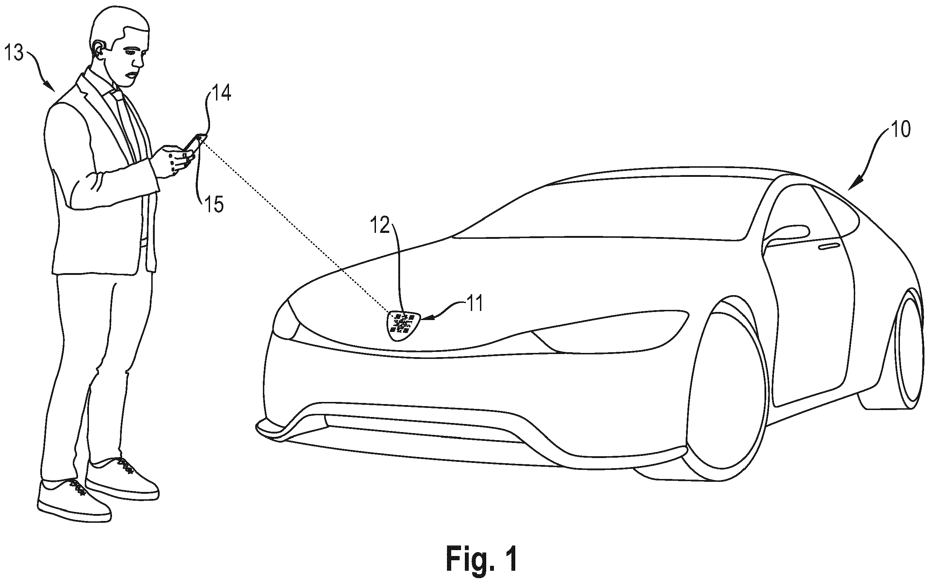

Figure 1 illustrates a typical usage scenario of the invention. Herein, a sports car (10) parked in a public setting bears a manufacturer's badge (11) on its engine hood. Invisible to the onlooker's eye under ambient light conditions (though depicted here for clarity), a barcode (12) embodying both public and private information has been printed, such as by aerosol jetting, upon the badge (11) using a composite ink activated with lanthanide-doped nanophosphors or similar nanoparticles. A suitable ink for this purpose is disclosed in Meruga, Jeevan M, William M Cross, P Stanley May, QuocAnh Luu, Grant A Crawford, and Jon J Kellar. "Security printing of covert quick response codes using upconverting nanoparticle inks." Nanotechnology 23.39 (2012)9.

In the present context, the term "barcode" is used in a broad sense that encompasses both one-dimensional or linear barcodes and two-dimensional or matrix barcodes. According to the scenario at hand, the barcode (12) takes the form of the well-established Quick Response (QR) code. Using his or her personal smartphone (14), an interested passerby (13) scans this barcode (12) while illuminating the badge (11) in near-infrared light, permitting the camera (15) of the smartphone (14) to capture an upconversion luminescence image of the barcode (12). Herein, "upconversion luminescence" refers to emission produced at wavelengths shorter than the excitation light.

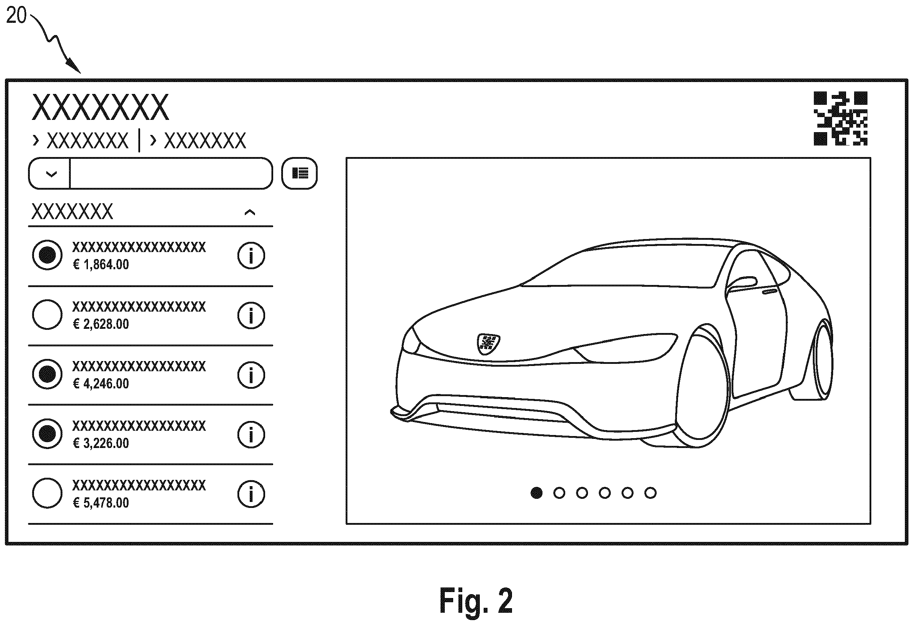

By means of the image thus obtained, the smartphone (14) extracts the public data embodied in the barcode (12), which in this case constitutes a uniform resource locator (URL). Via native URL redirection of the smartphone's operating system or a proprietary app provided by the car's manufacturer, the user (13, 31) is automatically presented with the exact configuration (20 - Figure 2) of the car (10). For instance, such configuration (20) may be hosted on the Internet by the manufacturer or an associated service provider.

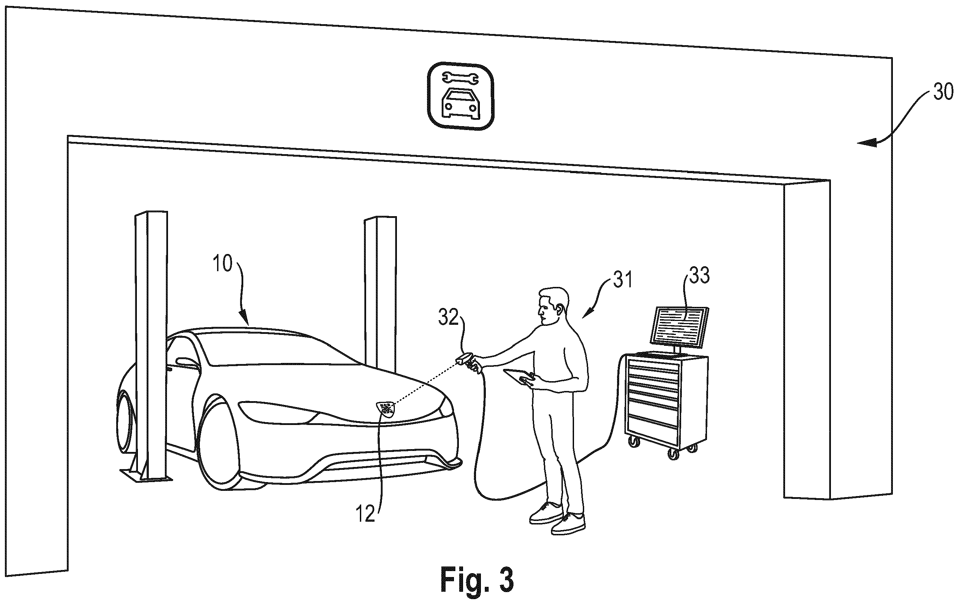

Figure 3 elucidates an alternative use of the barcode (12) in a repair shop or service center (30). Here, a service specialist (31) scans the badge (11) using a hand-held scanner (32) authenticated by the car's manufacturer. In contrast to the general-purpose smartphone (14) of Figure 1, this special-purpose reader (32) extracts the private information embodied in the barcode (12). The latter information comprises a further URL or similar reference that directs the specialist (31) to an online secure portal accessible exclusively to authorized service personnel. Through said portal, the specialist (31) is presented with private vehicle data (33) including the service history of the car (10).

## Claims

1. Method of investigating a configuration (20) of a vehicle (10),
**characterized in that**
- a badge (11) on the vehicle (10) is scanned for an invisible barcode (12) by a user (13, 31) and,
- by means of the barcode (12), the user (13, 31) is directed to the configuration (20) online.

2. Method as per claim 1,
**characterized in that**
- the barcode (12) is printed using a composite ink activated with lanthanide-doped nanoparticles and,
- during the scanning, the badge (11) is illuminated in near-infrared light such that the barcode (12) is scanned as an upconversion luminescence image.

3. Method as per claim 2,
**characterized in that**
- to effect the scanning, the image is captured in public using a camera (15) of a smartphone (14) and,
- upon the scanning, the configuration (20) is presented to the user (13, 31) on the smartphone (14).

4. Method as per claim 2,
**characterized in that**
- to effect the scanning, the image is captured at a service center (30) using an authenticated scanner (32) and,
- upon the scanning, private data (33) pertaining to the vehicle (10) are presented to a specialist (31) through a secure portal.

5. Method as per claim 4,
**characterized in that**
- the private data (33) includes a service history of the vehicle (10).

6. Method as per any of claims 1 through 5,
**characterized in that**
- the barcode (12) is two-dimensional.

7. Method as per claim 6,
**characterized in that**
- the barcode (12) is a Quick Response code (12).

8. Data processing apparatus having means for carrying out the method as per any of claims 1 through 7.

9. Computer program adapted to perform the method as per any of claims 1 through 7.

10. Computer-readable medium having stored thereon the program as per claim 9.

## Amended claims

### Amended claims in accordance with Rule 137(2) EPC.

1. Method of investigating a configuration (20) of a vehicle (10),
wherein
- a label on the vehicle (10) is scanned for a barcode (12) by a user (13, 31) and,
- by means of the barcode (12), the user (13, 31) is directed to the configuration (20) online,
**characterized in that**
- the barcode (12) is invisible and printed using a composite ink activated with lanthanide-doped nanoparticles,
- the label is a badge (11) that, during the scanning, is illuminated in near-infrared light such that the barcode (12) is scanned as an upconversion luminescence image,
- to effect the scanning, the image is captured at a service center (30) using an authenticated scanner (32) and,
- upon the scanning, private data (33) including a service history of the vehicle (10) are presented to a specialist (31) through a secure portal.

2. Method as per claim 1,
**characterized in that**
- the barcode (12) is two-dimensional.

3. Method as per claim 2,
**characterized in that**
- the barcode (12) is a Quick Response code (12).

4. Data processing apparatus having means for carrying out the method as per any of claims 1 through 3.

5. Computer program adapted to perform the method as per any of claims 1 through 3.

6. Computer-readable medium having stored thereon the program as per claim 5.
